# EUROPEAN PATENT APPLICATION

(11) **EP 4 321 990 A1**
(43) Date of publication of application: **14.02.2024**
(21) Application number: 22189837.2
(22) Date of filing: 11.08.2022
(51) Int. Cl.: G06F 3/16

(54) **SELECTIVELY COMMUNICATING AN AUDIO SIGNAL**

(71) Applicant: Koninklijke Philips N.V., 5656 AG Eindhoven (NL)
(72) Inventor: HENDRIKS, Monique, Eindhoven (NL); LAUTE, Niels, Eindhoven (NL); GEURTS, Lucas Jacobus Franciscus, 5656AG Eindhoven (NL); TALGORN, Elise Claude Valentine, 5656AG Eindhoven (NL); KUHLMANN, Daan, 5656AG Eindhoven (NL); BUIL, Vincentius Paulus, 5656AG Eindhoven (NL)
(74) Representative: Philips Intellectual Property & Standards

(57) **Abstract**

Proposed concepts aim to provide schemes, solutions, concepts, designs, methods and systems pertaining to selectively communicating an audio signal from a user to recipients. In particular, an electronic audio signal comprising a voice command from the user is processed in order to identify intended recipients. Once identified, a signal based on the voice command may be communicated exclusively to the identified recipients. In this way, confusion and increased cognitive burden associated with the use of voice commands in an environment with a plurality of potential recipients (i.e. other users and devices) may be supressed.

## Description

### FIELD OF THE INVENTION

The present invention relates to the field of audio signals from a user, and in particular to the communicating voice commands.

### BACKGROUND OF THE INVENTION

Voice interaction provides a natural, and therefore low mental effort, means for interaction with systems and other people. Further, voice interaction enables hands-free control of systems. However, while voice interaction may provide a convenient means to interact with systems and people, confusion may arise in multi-system and multi-user environments.

In other words, in situations involving multiple potential recipients (i.e. other users and devices), the intended recipient of a voice command can quickly become obscured. Further, voice interactions are inherently more complicated for systems to understand compared to abstracted interaction methods (i.e. operating a mouse, keyboard, or a touch screen). Thus, systems need to be smart in order to recognize user intentions.

By way of example, voice interaction may be particularly beneficial in healthcare based environments, such as an operating room, due to sterility requirements in which handsfree operation is highly desirable. These environments are characterized by team work. Indeed, multiple professionals may be in a single room and each may require interaction with multiple systems. In this case, the advantages of voice interaction (i.e. reduced attentional resources, hands-free control) may be negated through users having to filter out interactions (i.e. voice commands for the system, interaction with other users) from other users that are not directly relevant to them.

Furthermore, similar problems may arise when multiple users are interacting remotely, such as through videoconferencing. Users interacting in these environments may also use voice commands to direct devices (i.e. virtual personal assistants), or may need to interact with non-participants. The use of voice interaction may disrupt the ongoing videoconference. Additionally, speech that was intended for the videoconference may inadvertently be interpreted as voice commands for devices, or as interaction with non-participants. If the user has to make sure that the right systems are muted and unmuted at all times, the convenience of the use of voice commands is negated by the inconvenience of having to think about muting and unmuting.

### SUMMARY OF THE INVENTION

The invention is defined by the claims.

According to examples in accordance with an aspect of the invention, there is provided a method for selectively communicating an audio signal from a user to recipients, comprising:
obtaining an electronic audio signal comprising a recording of a voice command uttered by a user;
processing the electronic audio signal to extract content of the voice command;
identifying one or more intended recipients of the voice command from a plurality of potential recipients based on the extracted content; and
communicating a signal based on the voice command exclusively to the one or more intended recipients.

Proposed concepts aim to provide schemes, solutions, concepts, designs, methods and systems pertaining to selectively communicating an audio signal from a user to recipients. In particular, an electronic audio signal comprising a voice command from the user is processed in order to identify intended recipients. Once identified, a signal based on the voice command may be communicated exclusively to the identified recipients. In this way, confusion and increased cognitive burden associated with the use of voice commands in an environment with a plurality of potential recipients (i.e. other users and devices) may be supressed.

Indeed, by only communicating a voice command signal to intended recipients, problems associated with operating voice interaction-based systems in busy environments may be overcome. For example, if non-intended recipient(s) are human users, then a cognitive burden of determining whether a voice command is intended for them, and any potential confusion, may be avoided. If the non-intended recipients(s) are devices (i.e. virtual personal assistants, voice-activated devices), then accidental execution of the voice command by the device may be avoided.

Embodiments of the invention are based on the realization that content of a voice command uttered by a user may be used to determine intended recipients. In order to obtain such information, an electronic audio signal including a recording of a voice command is obtained. This is processed in order to extract the content used to identify potential recipients. The signal based on the voice command is then transmitted to (only) the intended recipients.

Put another way, voice interaction (via audio signals) is a natural, hands-free manner of interacting with systems and other users. However, when it is necessary for many users to interact with each other and/or many systems/devices, there exists a lot of overlap in audio signals. For users, this may be confusing and lead to miscommunication. For systems/devices, this may lead to execution of processes that are unintended by the user, and failing to execute intended processes. Thus, there exists a present need for a system that may selectively communicate audio signals to recipients (i.e. users and devices) with whom the user intends to interact.

Accordingly, embodiments of the invention aim to communicate a signal based on a voice command from the user only/exclusively to intended recipients. Intended recipients are determined based on content of the voice command (i.e. a mentioned name, a mentioned role, a command, a tone, a volume, a background noise, a voice direction, etc.). In this way, intended recipients may be accurately identified and receive the signal, while unintended recipients may not receive the signal, reducing (cognitive or computational) burden for the intended recipients.

In some embodiments, the electronic audio signal may comprise converting the voice command to text by inputting the electronic audio signal to a speech-to-text conversion algorithm. The extracted content may be based on the text, and identifying the one or more intended recipients may be based on the text.

A speech-to-text conversion algorithm provides an accurate way of extracting content of the audio signal. Indeed, such an algorithm may provide a script of uttered speech of the user, suppressing the impact of any background noise.

In a more specific embodiment, identifying one or more intended recipients may comprise: extracting information of the text by inputting the text to a natural language processing algorithm; and analyzing the information in order to identify one or more intended recipients of the voice signal from a plurality of potential recipients.

In some embodiments, the extracted content of the voice command may comprise at least one of: a potential recipients name, a potential recipient's role, a mentioned command, and a mentioned system.

Accordingly, an accurate assessment of the intended recipient may be performed.

In some embodiments, the method may further comprise: obtaining a video signal comprising footage of the user uttering the voice command; processing the video signal to extract a context of the voice command. Identifying one or more intended recipients of the voice command may be further based on the extracted user context. In a specific embodiment, the extracted context may comprise at least one of: a facing direction of the user, a pointing direction of the user, a head orientation of the user, and a facial expression of the user.

As well as the electronic audio signal, a video signal may provide information useful for determining the intended recipients. For example, users typically look in the direction/have their head orientated toward an intended recipient when speaking. Thus, by processing a video signal of the user uttering the voice command, a faster and more accurate determination of the one or more intended recipients may be performed.

In yet further embodiments, processing the video signal may comprise analyzing the video signal to determine a gaze direction of the user. In this case, identifying the one or more intended recipients may be further based on the gaze direction of the user.

Indeed, one particularly useful metric for determining an intended recipient is a gaze direction (i.e. where the user is looking) when then they utter the voice command. Accordingly, this may lead to a faster and more accurate identification of intended recipients.

In some embodiments, the steps of obtaining the electronic audio signal, processing the electronic audio signal, and identifying the one or more intended recipients may be performed simultaneously with the step of communicating the signal.

Put another way, some embodiments of the invention may provide for (approximately) simultaneous receiving of the electronic audio signal and determining of intended recipients. This may ensure that intended recipients receive the signal based on the voice command, while unintended recipients do not, as soon as enough information is provided by the user speaking to determine intended recipients. Indeed, this provides a means that reflects the way in which people typically determine when they are an intended recipient of another person's speech (i.e. in real-time).

Thus, such a means allows for narrowing to the intended recipients quickly, such that the intended recipients may receive the signal based on the voice command in as close to real-time as possible. For example, if the intended recipient is a system/device, this may enable the initialization of a requested process as soon as possible. Alternatively, if the intended recipient is another user, this may enable the user to receive the signal in as close to real time as possible, providing a relatively natural hearing of the voice command.

In some embodiments, the method may further comprise communicating a notification of the electronic audio signal to potential recipients that are not identified as intended recipients.

Accordingly, non-intended/unintended potential recipients (i.e. those not determined to be intended recipients) may still be made aware of the user uttering the voice command. However, by instead providing a notification, a low burden (i.e. low cognitive burden) means of informing may be provided. For example, the notification may be visual or tactile, so as to not unnecessarily burden the unintended recipients audio system. Alternatively, a low volume form of the signal, or abstracted sound may be provided.

It may be beneficial for even those who are not the intended recipients of a voice command to be aware of the voice command. If they are another user, this may inform the non-intended recipient's actions and/or utterances. If they are a system/device, this information may be used to determine present/future actions to be taken (i.e. a changing of an active microphone, in order to capture voices of other users more likely to intend to issue a voice command to the device/system).

In some embodiments, the method may further comprise suppressing the voice command such that the plurality of potential recipients not identified as intended recipients do not hear the voice command or hear the voice command at a lower volume.

This may effectively reduce the (unnecessary) computational/cognitive burden associated with hearing voice commands that are not intended for each user.

In a specific embodiment, the voice command may be suppressed by at least one of noise-cancelling headphones of the potential recipients and muting of the user.

In some embodiments, the signal is communicated to headphones of the one or more intended recipients.

In this way, only the intended recipients may hear/be aware of the signal.

In some embodiments, the electronic audio signal may be obtained by a microphone adapted to capture voice commands uttered by the user.

According to further aspects of the invention, there is provided a computer program comprising computer program code means adapted, when said computer program is run on a computer, to implement a method for selectively communicating an audio signal from a user to recipients.

According to additional aspects of the invention, there is provided a system for selectively communicating a voice signal from a user to recipients, comprising: a receiving component configured to obtain an electronic audio signal comprising a recording of a voice command uttered by a user; an audio analysis component configured to process the electronic audio signal to extract content of the voice command; a decision component configured to identify one or more intended recipients of the voice command from a plurality of potential recipients based on the extracted content; and a transmission component configured to communicate a signal based on the voice command exclusively to the one or more intended recipients.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 presents a flow diagram of a method for selectively communicating an audio signal from a user to recipients according to an embodiment;
FIG. 2 depicts the identification of an intended recipient in an example situation according to an aspect of an embodiment of the invention;
FIG. 3 presents a simplified block diagram of a system for selectively communicating an audio signal from a user to recipients according to another embodiment; and
FIG. 4 is a simplified block diagram of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

It should be understood that the Figures are merely schematic and are not drawn to scale. It should also be understood that the same reference numerals are used throughout the Figures to indicate the same or similar parts.

The invention proposes concepts for selectively communicating an audio signal from a user to recipients. In particular, an electronic audio signal comprising a voice command from the user is processed in order to identify intended recipients. Once identified, a signal based on the voice command may be communicated exclusively to the identified recipients. In this way, confusion and increased cognitive burden associated with the use of voice commands in an environment with a plurality of potential recipients (i.e. other users and devices) may be supressed.

Proposed concepts are based on the realisation that there exists a present need for a means of overcoming the shortfalls of voice interaction in crowded/busy environments. Such environments have many users that may be issuing voice commands to other users, as well as other systems. Such environments include videoconference meetings, surgical environments, air-traffic control offices, etc. Accordingly, the advantages of voice interaction (i.e. natural interaction, hands-free, etc.) for a user may be negated by the hassle of filtering out voice commands that are not intended for the user. As such, confusion may arise and a cognitive load is increased. Embodiments of the present invention aim to overcome these problems by identifying intended recipients of voice commands, and thus handling the voice commands in an appropriate manner.

Moreover, systems/device may also benefit from embodiments of the present invention. For example, in an environment where many users are issuing voice commands to many systems, it may be the case that the system misinterprets the intended recipient of the command, and erroneously initiates a process. Accordingly, by only transmitting a signal based on the voice command to systems intended as recipients, an additional computational burden for the system may be avoided.

Put another way, the invention provides concepts for identifying intended recipients of voice commands, whether they be systems or people, and redirecting the voice command to these intended recipients while minimizing disruption for others within earshot.

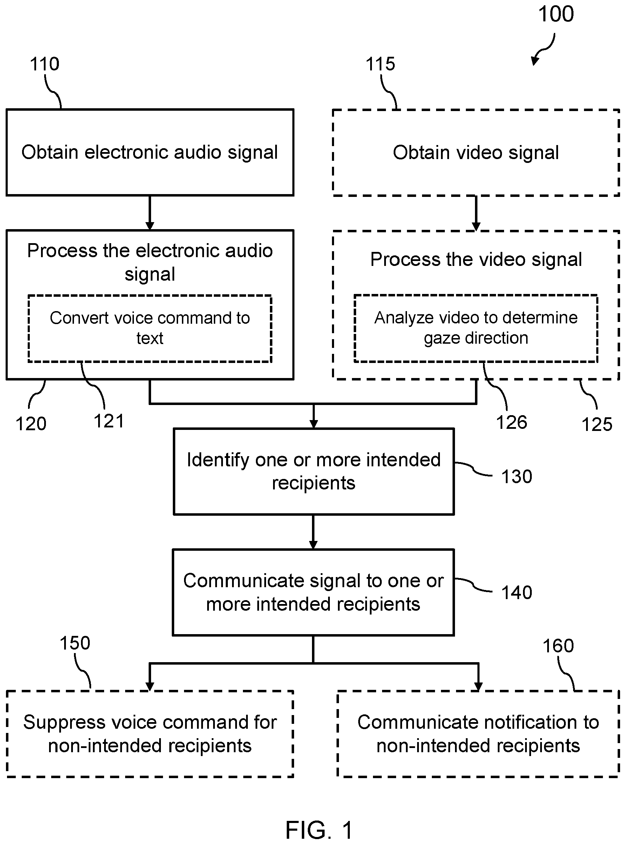

In some embodiments, the following elements are provided:
(i) A means for eliminating or reducing disruption of voice commands (e.g. noise-cancelling headphones, a muting function);
(ii) A means for capturing and interpreting voice commands (e.g. one or more microphones in the room, speech-to-text conversion and natural language processing);
(iii) A means for determining the intended recipient of the voice command, described in more detail in reference to FIG. 1; and
(iv) A means for redirecting the voice command to the intended recipient. In a case in which the intended recipient is a person, the voice command can be directly forwarded to headphones worn by the recipient, for example. In a case in which the intended recipient is a system/device, the voice command will be interpreted by the system through known methods such as those deployed in known virtual assistants;
(v) A means for sending low-burden signals to non-recipients to inform them that the communication they may have overheard and/or have inferred (i.e. from other observable behaviour such as movement of the mouth) is not intended for them and can therefore safely be ignored.

FIG. 1 presents a flow diagram of a method for selectively communicating an audio signal from a user to recipients according to an embodiment. Optional steps are shown in dotted boxes.

The depicted method may provide the benefit of redirecting a voice command to only the potential recipients that are intended for receipt of the voice command by the user uttering the voice command. In this way, intended recipients (i.e. systems/devices and other users) receive the voice command, while other potential recipients are not required to process (i.e. mentally process in the case of a user, computationally process in the case of a system) the voice command, reducing the associated burden.

Indeed, the method may prove particularly beneficial in multi-user/multi-system environments where (i) the intended recipient of voice commands may be unclear; and (b) there may be many users uttering voice commands. Such environments are inherently burdensome in terms of noise generated, and often obviate the benefits associated with voice interaction, particularly with systems/devices, but also with other users.

At step 110, an electronic audio signal comprising a recording of a voice command uttered by a user is obtained. The electronic audio signal may be digital (i.e. an audio file) or analog (i.e. an electrical signal from a microphone). In any case, the electronic audio signal includes at least a recording of a voice command. Of course the electronic audio signal may also include background/environmental noise, other utterances/noises/speech of the user, speech of other users/systems, etc.

The electronic audio signal may be obtained directly (i.e. in real-time) from the user as they utter/say the voice command. Alternatively, the electronic audio signal may be obtained from a database, or any other memory storage of electronic audio signals.

In some embodiments, the electronic audio signal is obtained by a microphone adapted to capture voice commands uttered by the user. This may be a personal microphone of the user (i.e. part of a headset), or may be a microphone placed in the environment suitable for obtaining the voice commands of the user. Put another way, one or more microphones may be placed in the vicinity (i.e. "within earshot") of users, worn on clothes of users, or provided with headsets of the users, in order to capture voice commands from the users.

At step 120, the electronic audio signal is processed to extract content of the voice command.

As stated above, the electronic audio signal may also include background/environmental noise, other utterances/noises/speech of the user, speech of other users/systems, etc. Thus, at this step, the electronic audio signal may be processed, using known techniques, to remove elements corresponding to unwanted noise.

Furthermore, the electronic audio signal may be processed in order to extract the voice command, and then may be processed to extract content (i.e. a meaning) of the voice command.

In some embodiments, the extracted content of the voice command comprises at least one of a potential recipients name, a potential recipients role, a mentioned command, and a mentioned system. Indeed, the extracted content may be any content of the voice command that provides information useful for identifying an intended recipient. Further examples include mentioned names, mentioned roles, a command type, a tone of the voice command, a volume of the voice command, background noise corresponding to the voice command, a direction of the user's voice, etc.

In other words, content of the voice command is extracted, which is used to determine whether or not a potential recipient is an intended recipient. Information of the voice command that may help this includes: the recipient's name being mentioned; the recipient's role being mentioned; the substantive content of the information, request or command, as it may be related to the role of the recipient (e.g. the command 'prepare an injection of ...' may indicate that the intended recipient is a nurse in charge of preparing injections); and system related content of the command (e.g. if the user expresses the intention to make a note, the system for making and storing notes will be inferred as the intended recipient).

In some embodiments, processing the electronic audio signal comprises a step 121 of converting the voice command to text by inputting the electronic audio signal to a speech-to-text conversion algorithm. Accordingly, processing the electronic audio signal may provide a transcript of the user's voice command. In this case, the extracted content is based on the text (i.e. the extracted content is derived from the text/transcript corresponding to the user voice command). This will be explained in more detail in relation to step 130 below.

At step 130, one or more intended recipients of the voice command are identified from a plurality of potential recipients based on the extracted content. As outlined above, the extracted context (i.e. meaning) of the voice command contains clues that may be used to determine the intended recipient of the user's voice utterance.

Intended recipients may be any recipients that the user intends to receive the voice command and/or whoever the voice command may be relevant to. Intended recipients may be any entity capable of carrying out the voice command. In this way, the intended recipients may be systems (i.e. personal devices, virtual personal assistants, notation systems) or other people/humans/users.

When processing the electronic audio signal comprises the step 121 converting the voice command to text, identifying the one or more intended recipients is based on the text. More specifically, in this case identifying the intended recipients comprises extracting information of the text by inputting the text to a natural language processing algorithm (i.e. the text is interpreted by a natural language processing algorithm). The extracted information is then analyzed (using known methods) in order to identify the one or more intended recipients of the voice signal from a plurality of potential recipients stored in a database or other storage medium.

In other words, existing speech-to-text conversion methods may be used to convert the speech (i.e. the voice command) to text. Subsequently, existing natural language processing methods may be used to extract and interpret the voice commands. Indeed, when voice commands are translated to text, natural language processing may be used to extract indications of the intended recipient(s).

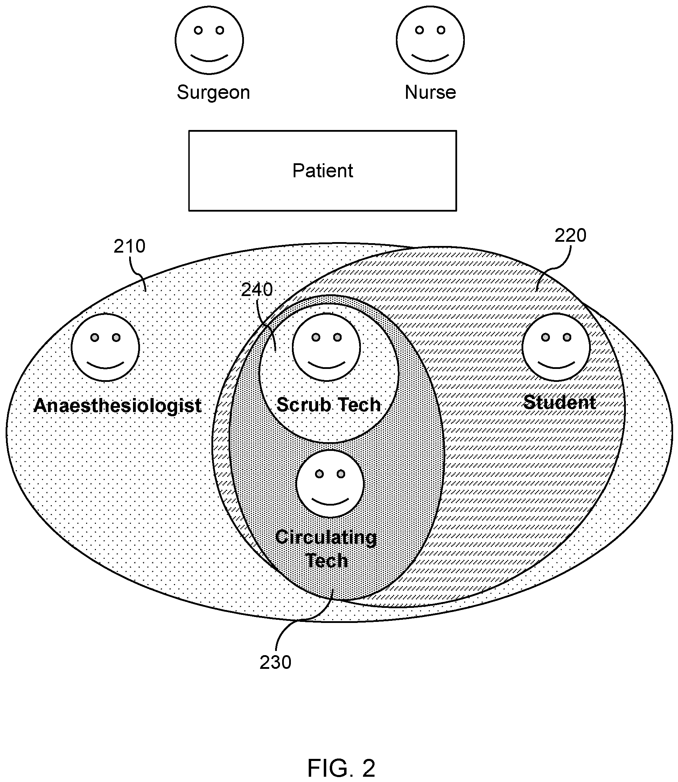

In some embodiments, instead of identifying intended recipients, all potential recipients may be initially designated as intended recipients. The context (i.e. the indicative clues) may then be used to exclude potential intended recipients of the voice command (i.e. identify unintended recipients), rather than identify intended recipients. This may be particularly beneficial, for example, in case confidential information is uttered. Thus, excluded potential recipients that do not have the clearance for receiving the information involved in the voice command may not hear the information. Indeed, this case is described in more detail in reference to FIG. 2 below.

In some embodiments, the method may further include optional steps 115 and 125. At step 115, a video signal comprising footage of the user uttering the voice command is obtained. Similarly to the electronic audio signal, the (recorded) footage may include other information, but must include at least footage of at least part of the user uttering the voice command (i.e. a head of the user, a body of the user, and eyes of the user).

The video signal may be obtained in real-time, or may be obtained from a database or other memory store. In some cases, the video signal may be acquired in real-time from camera(s) in the vicinity of the user. In one specific example, the video signal may be obtained from a webcam facing the user.

In step 125, the video signal is processed in order to extract a context of the voice command. The processing may be conducted using known video-processing methods/techniques appreciated by the skilled person. By processing the video signal, a context (i.e. information about the user and their environment) may be gathered, that may provides information/clues as to whom they intend to issue the voice command.

More specifically, the extracted context may comprise at least one of: a facing direction of the user, a pointing direction of the user, a head orientation of the user, and a facial expression of the user. It should be appreciated that other information that may be derived from video footage of the user uttering the voice command may also provide clues as to who the intended recipient is.

In a more specific example, processing the video signal comprises a step 126 analyzing the video signal to determine a gaze direction of the user. Gaze direction (i.e. where the user is looking) may be very beneficial for determining the intended recipient, as it is often the case that the user will be looking in the direction of the intended recipient when they issue/utter the voice command. For example, when the user is talking to a videoconference, they may be looking at the representation of the intended recipient on the screen.

When steps 115 and 125 are conducted, identifying the one or more intended recipients of the voice command is further based on the extracted user context. Thus, both the content of the voice command, and the context of the user may be used to accurately determine the intended recipient. When the gaze direction is determined, identifying the one or more intended recipients is further based on the gaze direction of the user.

By way of brief explanation, the gaze direction of the user may be toward an intended recipient. Alternatively, the gaze direction may also provide information to deduce other intended recipients. For example, if the user (i.e. a surgeon) looks at a part of a patient's body with a known medical problem, it may be deduced that the intended recipient is related to that patient's body part with the known medical problem. Indeed, there may be a role associated with the body part and known medical problem. If the body part is associated with bleeding, then a nurse may be the intended recipient (i.e. to clear up a wound), or if associated with an incision area, then a scrub tech may be the intended recipient (i.e. to provide a surgical instrument).

Put another way, information from cameras may be utilized in order to identify indications for the intended recipient (i.e. from body language). Indications may include: the user turning in a certain direction to face a potential recipient; the user pointing in the direction of a potential recipient; the user turning their head in a certain direction to be able to look at a potential recipient; facial expressions or changes in facial expression of the user (i.e. a more neutral expression may be associated with issuing a voice command to a system/device compared to another user/person).

More specifically, gaze tracking may be utilised to identify indications for the intended recipient. For example, if the user uttering the voice command is looking at another person while uttering the voice command, or within a certain time frame before uttering the voice command, or within a certain time frame after uttering the voice command, this may indicate (to varying degrees of confidence) the intended recipient. If the user is looking at certain objects that are related either to certain systems or to certain roles, those systems or roles may be inferred as the intended recipients (i.e. looking at a nurse's cart may indicate the recipient of the command being the nurse, while looking at a radiology image may indicate a picture archiving and communication system being the recipient of the command, etc.).

For remote video calls, the intended recipient may be inferred to be the video call if the user is looking at the video on the screen. Further, looking at a certain participant in the call may be an indication of intending to direct the speech towards one of the participants privately.

In some cases, certain locations may be assigned as indicating certain recipients. For example, if the user looks towards the door, they may intend the voice command for a system that operates the door. If the user's children are known to be in the room to the right, voice commands may be inferred as directing the command voice towards the children when the user looks to the right.

As another embodiment, gaze tracking may be used to correct for possible mistaken intended recipients and/or in case the intended recipient missed the previously uttered command through a lapse of attention. When the same command is uttered twice and the second time, the user is looking at the intended recipient, it may be inferred that a mistaken selection of an intended recipient has been made, and the mistake may be corrected. Alternatively, it may be inferred that the intended recipient needs a stronger signal to capture their attention (i.e. the volume of the signal may be increase, or an additional visual cue may be added to the signal to direct the intended recipient's attention).

Moving on to step 140, a signal based on the voice command is communicated exclusively to the one or more intended recipients (i.e. the signal is only communicated to the intended recipients). In other words, a signal associated with the voice command (i.e. the voice command itself, the electronic audio signal, or an augmented/modified version of the voice command, etc.) is communicated/sent/transmitted to the one or more intended recipients. Meanwhile, the potential recipients not identified as intended recipients do not receive the signal.

The signal may be communicated to headphones of the one or more intended recipients (in the case the intended recipient is another user/person), or may be communicated to an audio input of the one or more intended recipients (in the case the intended recipient is a system/device). Of course, the skilled person would appreciate additional modes by which the signal may be transmitted.

At optional step 150, the voice command is suppressed. In this way, the plurality of potential recipients not identified as intended recipients do not hear the voice command or hear the voice command at a lower volume. As a result, the cognitive burden for the non-intended recipients associated with hearing a voice command is reduced.

In one example, users/people in the same room (i.e. who are within earshot of others giving voice commands) may wear noise cancelling headphones to reduce the disruption caused by voice commands that are not intended for them. The signal may be directed towards their headphones when it is determined that a voice command is intended for them. Alternatively, the user may be muted (i.e. in a videoconferencing system) on behalf of the potential recipient until it is determined that a voice command is intended for the potential recipient.

Further embodiments may provide for specifically filtering out voice sounds from the environment either through some device worn by the users or from the room itself.

At optional step 160, a notification of the electronic audio signal is communicated to potential recipients that are not identified as intended recipients. Thus, other potential recipients may be informed of the voice command, but also know that it does not concern them.

Indeed, the notification may be a low burden notification, such as a low volume sound, a visual cue, etc. Essentially, the notification is any means by which unintended recipients may be informed of the voice command without simply communicating a form of the voice command itself.

Put another way, some embodiments of the invention may include step 160, in which a notification (i.e a low-burden signal) is sent to non-recipients to inform them that the communication (which they may have overheard vaguely in the background and/or have inferred from other observable behaviour) is not intended for them and can therefore safely be ignored. It may be beneficial to inform users who are not intended recipients that a voice command is being sent to other recipients but is not intended for them. In one example, a visual/hologram may provide an indication of the system that the user is communicating with, providing ease of mind to the others that they are not missing any important information.

Moreover, in additional embodiments, where the invention is used in videoconferencing or virtual reality, a video stream may be altered so that body signals of speech (e.g. the mouth moving) are not visible for users who are not intended recipients.

Furthermore, it should be appreciated that all of the above steps may be performed substantially simultaneously (i.e. in real-time). Specifically, the steps of obtaining the electronic audio signal, processing the electronic audio signal, and identifying the one or more intended recipients are performed simultaneously with the step of communicating the signal. In this way, any unnatural delay may be minimized. This will be described by way of example below.

Moving on to FIG. 2, there is depicted a scenario in which an intended recipient is identified in real time. In this scenario, a surgeon is a user uttering a voice command, while a nurse, anaesthesiologist, scrub tech, circulating tech, and a student are potential recipients of the voice commands. In other embodiments, various systems may also be present as potential recipients (i.e. picture archiving and communication systems).

This depicted example portrays how likely recipients for the voice command may be determined in real-time. The prediction of the likely recipient will increase in accuracy when more clues (i.e. content of the voice command, a user context) are captured and processed. Therefore, embodiments of the invention may deploy a cascade of narrowing down the group of recipients while a message is being uttered, in order to prevent a delay in the communication while still ensuring that the intended recipient receives the message.

Initially, the surgeon starts speaking. A video signal is obtained that shows that their body is facing the opposite side of the patient's bed, thus it is determined that those in area 210 may be intended recipients (i.e. the anaesthesiologist, scrub tech, student and circulating tech).

Thus, initially a signal (based on the first few words of the voice command uttered by the surgeon) is only communicated to the potential recipients in area 210.

Subsequently, an audio signal is received including the words uttered by the surgeon of 'Please hand me the...' Thus, embodiments of the invention determines content of the voice command corresponding to the role of the recipient, and therefore the intended recipient must be someone who hands things to the surgeon. Accordingly, intended recipients may include those in area 220 (i.e. the scrub tech, circulating tech and student).

After this, the video signal shows that the surgeon looks up, in a direction of the circulating tech and scrub tech. Thus, those in area 230 are determined as potential intended recipients (i.e. the scrub tech and cirulating tech).

Finally, the surgeon carries on their sentence with the words 'scalpel number 5'. As soon as the word scalpel is uttered, it may be determined that the intended recipient of the voice command is the scrub tech in area 240. Accordingly, the last part of the signal corresponding to the voice command is communicated only to the scrub tech.

In summary, the signal communicated to the potential recipients may include parts of the voice command as below:
(i) The Nurse does not receive a signal at all, as the surgeon was facing in another direction.
(ii) The anaesthesiologist receives a signal including the words 'Please hand me the... ', as it was only determined at this point that the voice command did not fit the role of the anaesthesiologist.
(iii) The student receives a signal including the words 'Please hand me the...', as it was only determined that the Student was not an intended recipient when the surgeon looked up (i.e. the student was excluded on the basis of the surgeon's gaze detection).
(iv) The circulating tech receives a signal including the words 'Please hand me the scalpel... ', as it was only determined at the time that the word 'scalpel' was uttered that the circulating tech was not an intended recipient because the scalpels are in the room and the role of the circulating tech is to retrieve instruments that are not in the room.
(v) The scrub tech hears the full voice command of the surgeon as the scrub tech was always identified as an intended recipient.

Furthermore, implementations of the invention may employ predictions that use data from past communications to learn a model that is environment specific (i.e. adding weights to various content and context based factors). A threshold of the prediction probability/confidence may be used to determine when a certain recipient may be determined as an intended recipient or not.

In the context of the above example, the threshold may be set at a probability level (i.e. probability that the potential recipient is determined not to be an intended recipient) of 25%. Thus, when the surgeon was facing the opposite side of the bed, it may be determined that there is a 20% probability that they would start speaking to the nurse and therefore cut off the nurse (i.e. not send a signal containing the voice command). In the next step, the surgeon uttered the words 'Please hand me the...' it may be determined that there is only a 10% probability they would be talking to the anaesthesiologist and therefore exclude them.

Overall, FIG. 2 depicts that embodiments of the invention may communicate a signal to intended recipients (or potential recipients not yet determined to be unintended recipients) simultaneously with receiving an electronic audio signal associated with the user. However, recipients are removed from the identified intended recipients as more information is received via the electronic audio signal (and optionally the video signal).

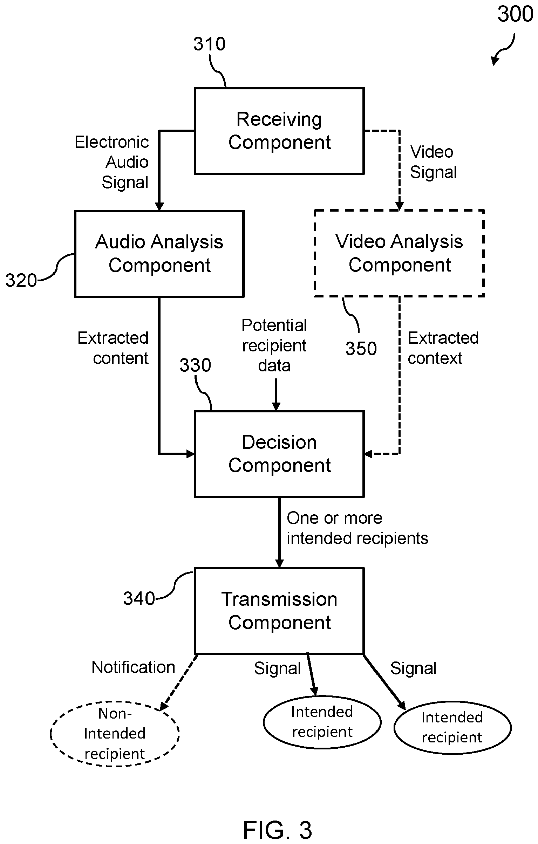

FIG. 3 presents a simplified block diagram 300 of a system for selectively communicating an audio signal from a user to recipients (i.e. a system that may conduct the method 100 described in relation to FIG. 1. The system 300 includes a receiving component 310, an audio analysis component 320, a decision component 330, and a transmission component 340. Optionally, the system 300 may further comprise a video analysis component 350.

The receiving component 310 is configured to obtain an electronic audio signal comprising a recording of a voice command uttered by a user. This may be obtained directly from the user (i.e. via a microphone) or from a database/other memory. The obtained electronic audio signal is then transmitted to the audio analysis component.

The audio analysis component 320 is configured to process the electronic audio signal (received from the receiving component 310) to extract content of the voice command. The audio analysis may achieve this using known speech-to-text conversion and natural language processing algorithms.

Once the content of the voice command is extracted, a decision component 330 used. This component 330 is configured to identify one or more intended recipients of the voice command from a plurality of potential recipients based on the extracted content. Indeed, potential recipient data comprising metadata of the potential recipient may also be obtained to facilitate the identification. The metadata may include personal information of the plurality of potential recipients, such as names, roles, system identifications, etc.

When the one or more intended recipients are identified, these are given to the transmission component 340. The transmission component 340 is configured to communicate a signal based on the voice command exclusively to the one or more intended recipients. This may be achieved by local networks, the internet, or via connected speakers/output devices.

In some embodiments, the transmission component 340 may also be configured to communicate a (low cognitive/computational burden) notification of the electronic audio signal to potential recipients that are not identified as intended recipients.

Furthermore, in additional embodiments, the receiving component 310 may also obtain a video signal comprising footage of the user uttering the voice command. In this case, a video analysis component 350 may be provided, which is configured to process the video signal to extract a context of the voice command, and wherein identifying one or more intended recipients of the voice command is further based on the extracted user context. Thus, the decision component 330 may use the extracted user context alongside the extracted content and potential recipient data to identify the one or more intended recipients.

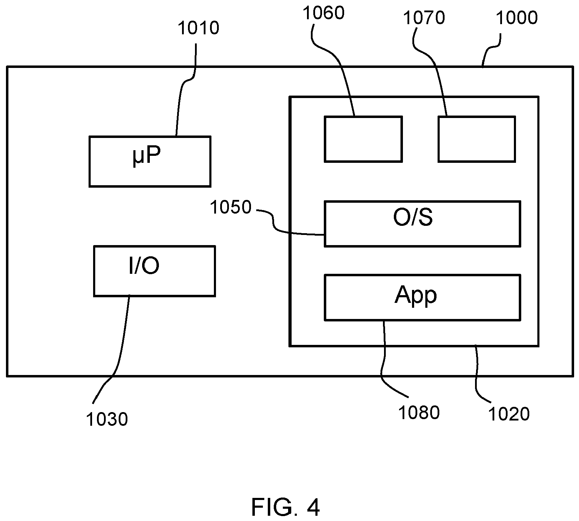

Accordingly, the system 300 provides a means by which a voice command is selectively communicated. This reduces a confusion and burden for non-intended recipients, negating disadvantages associated with voice interaction based systems.
Finally, FIG. 4 illustrates an example of a computer 1000 within which one or more parts of an embodiment may be employed. Various operations discussed above may utilize the capabilities of the computer 1000. For example, one or more parts of a system for selectively communicating an audio signal from a user to recipients may be incorporated in any element, module, application, and/or component discussed herein. In this regard, it is to be understood that system functional blocks can run on a single computer or may be distributed over several computers and locations (e.g. connected via internet).

The computer 1000 includes, but is not limited to, PCs, workstations, laptops, PDAs, palm devices, servers, storages, and the like. Generally, in terms of hardware architecture, the computer 1000 may include one or more processors 1010, memory 1020 and one or more I/O devices 1030 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1010 is a hardware device for executing software that can be stored in the memory 1020. The processor 1010 can be virtually any custom made or commercially available processor, a central processing unit (CPU), a digital signal processor (DSP), or an auxiliary processor among several processors associated with the computer 1000, and the processor 1010 may be a semiconductor based microprocessor (in the form of a microchip) or a microprocessor.

The memory 1020 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1020 may incorporate electronic, magnetic, optical, and/or other types of storage media. Note that the memory 1020 can have a distributed architecture, where various components are situated remote from one another, but can be accessed by the processor 1010.

The software in the memory 1020 may include one or more separate programs, each of which comprises an ordered listing of executable instructions for implementing logical functions. The software in the memory 1020 includes a suitable operating system (O/S) 1050, compiler 1060, source code 1070, and one or more applications 1080 in accordance with exemplary embodiments. As illustrated, the application 1080 comprises numerous functional components for implementing the features and operations of the exemplary embodiments. The application 1080 of the computer 1000 may represent various applications, computational units, logic, functional units, processes, operations, virtual entities, and/or modules in accordance with exemplary embodiments, but the application 1080 is not meant to be a limitation.

The operating system 1050 controls the execution of other computer programs, and provides scheduling, input-output control, file and data management, memory management, and communication control and related services. It is contemplated by the inventors that the application 1080 for implementing exemplary embodiments may be applicable on all commercially available operating systems.

Application 1080 may be a source program, executable program (object code), script, or any other entity comprising a set of instructions to be performed. When a source program, then the program is usually translated via a compiler (such as the compiler 1060), assembler, interpreter, or the like, which may or may not be included within the memory 1020, so as to operate properly in connection with the O/S 1050. Furthermore, the application 1080 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 1030 may include input devices such as, for example but not limited to, a mouse, keyboard, scanner, microphone, camera, etc. Furthermore, the I/O devices 1030 may also include output devices, for example but not limited to a printer, display, etc. Finally, the I/O devices 1030 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1030 also include components for communicating over various networks, such as the Internet or intranet.

If the computer 1000 is a PC, workstation, intelligent device or the like, the software in the memory 1020 may further include a basic input output system (BIOS) (omitted for simplicity). The BIOS is a set of essential software routines that initialize and test hardware at start-up, start the O/S 1050, and support the transfer of data among the hardware devices. The BIOS is stored in some type of read-only-memory, such as ROM, PROM, EPROM, EEPROM or the like, so that the BIOS can be executed when the computer 800 is activated.

When the computer 1000 is in operation, the processor 1010 is configured to execute software stored within the memory 1020, to communicate data to and from the memory 1020, and to generally control operations of the computer 1000 pursuant to the software. The application 1080 and the O/S 1050 are read, in whole or in part, by the processor 1010, perhaps buffered within the processor 1010, and then executed.

When the application 1080 is implemented in software it should be noted that the application 1080 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1080 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods described in relation to FIG. 1, and the system described in relation to FIG. 3, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagram FIG. 3 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method (100) for selectively communicating an audio signal from a user to recipients, comprising:
obtaining (110) an electronic audio signal comprising a recording of a voice command uttered by a user;
processing (120) the electronic audio signal to extract content of the voice command;
identifying (130) one or more intended recipients of the voice command from a plurality of potential recipients based on the extracted content; and
communicating (140) a signal based on the voice command exclusively to the one or more intended recipients.

2. The method of claim 1, wherein processing 120) the electronic audio signal comprises converting (121) the voice command to text by inputting the electronic audio signal to a speech-to-text conversion algorithm, wherein the extracted content is based on the text, and wherein identifying (130) the one or more intended recipients is based on the text.

3. The method of claim 2, wherein identifying (130) one or more intended recipients comprises:
extracting information of the text by inputting the text to a natural language processing algorithm; and
analyzing the information in order to identify one or more intended recipients of the voice signal from a plurality of potential recipients.

4. The method of claim 1, wherein the extracted content of the voice command comprises at least one of: a potential recipients name, a potential recipients role, a mentioned command, and a mentioned system.

5. The method of any of claims 1-4, further comprising:
obtaining (115) a video signal comprising footage of the user uttering the voice command;
processing (125) the video signal to extract a context of the voice command, and wherein identifying one or more intended recipients of the voice command is further based on the extracted user context.

6. The method of claim 5, wherein the extracted context comprises at least one of: a facing direction of the user, a pointing direction of the user, a head orientation of the user, and a facial expression of the user.

7. The method of claim 5 or 6, wherein processing the video signal comprises analyzing (126) the video signal to determine a gaze direction of the user, and wherein identifying the one or more intended recipients is further based on the gaze direction of the user.

8. The method of any of claims 1-7, wherein the steps of obtaining the electronic audio signal (110), processing the electronic audio signal (120), and identifying the one or more intended recipients (130) are performed simultaneously with the step of communicating the signal (140).

9. The method of any of claims 1-8, further comprising communicating (160) a notification of the electronic audio signal to potential recipients that are not identified as intended recipients.

10. The method of any of claims 1-9, further comprising suppressing (150) the voice command such that the plurality of potential recipients not identified as intended recipients do not hear the voice command or hear the voice command at a lower volume.

11. The method of claim 10, wherein the voice command is suppressed by at least one of noise-cancelling headphones of the potential recipients and muting of the user.

12. The method of any of claims 1-11, wherein the signal is communicated to headphones of the one or more intended recipients.

13. The method of any of claims 1-12, wherein the electronic audio signal is obtained by a microphone adapted to capture voice commands uttered by the user.

14. A computer program comprising computer program code means adapted, when said computer program is run on a computer, to implement the method of any of claims 1-13.

15. A system (300) for selectively communicating a voice signal from a user to recipients, comprising:
a receiving component (310) configured to obtain an electronic audio signal comprising a recording of a voice command uttered by a user;
an audio analysis component (320) configured to process the electronic audio signal to extract content of the voice command;
a decision component (330) configured to identify one or more intended recipients of the voice command from a plurality of potential recipients based on the extracted content; and
a transmission component (340) configured to communicate a signal based on the voice command exclusively to the one or more intended recipients.
